(19) Europäisches Patentamt
European Patent Office
Office européen des brevets

(11) Veröffentlichungsnummer: **0 359 821**
**A1**

(12) # EUROPÄISCHE PATENTANMELDUNG
## veröffentlicht nach Art. 158 Abs. 3 EPÜ

(21) Anmeldenummer: **88905462.3**

(51) Int. Cl.[5]: **A01N 31/14**

(22) Anmeldetag: **17.03.88**

(86) Internationale Anmeldenummer:
**PCT/SU88/00052**

(87) Internationale Veröffentlichungsnummer:
**WO 89/08393 (21.09.89 89/23)**

(43) Veröffentlichungstag der Anmeldung:
**28.03.90 Patentblatt 90/13**

(84) Benannte Vertragsstaaten:
**CH DE FR GB IT LI**

(71) Anmelder: **VSESOJUZNY NAUCHNO-ISSLEDOVATELSKY INSTITUT SELSKOKHOZYAISTVENNOI BIOTEKHNOLOGII VSESOJUZNOI AKADEMII SELSKOKHOZYAISTVENNYKH NAUK IMENI V.I. LENINA**
**ul. Pskovskaya 12-4 Moscow, 127253(SU)**

Anmelder: **LENINGRADSKY TEKHNOLOGICHESKY INSTITUT IMENI LENSOVETA**
**Moskovsky pr. 26**
**Leningrad, 198013(SU)**

Anmelder: **VSESOJUZNY NAUCHNO-ISSLEDOVATELSKY INSTITUT RASTENIEVODSTVA IMENI N.I. VAVILOVA VSESOJUZNOI AKADEMII SELSKOKHOZYAISTVENNYKH NAUK IMENI V.I. LENINA**
**ul. gertsena, 44 Leningrad, 190000(SU)**

(72) Erfinder: **FEDIN, Marat Alexandrovich**
**ul. Dm.Ulyanova, 24-158**
**Moscow, 107078(SU)**
Erfinder: **KUZNETSOVA, Tatyana Alexandrovna**
**Khoroshevskoe shosse, 36b-62**
**Moscow, 123007(SU)**
Erfinder: **ALSING, Tamara Karlovna**
**Zagrebsky bulvar, 7-1-455**
**Leningrad, 192284(SU)**
Erfinder: **LAVRENTIEV, Anatoly Nikitich**
**ul. Nalichnaya, 49-87**
**Leningrad, 199057(SU)**
Erfinder: **VISHNYAKOV, Alexandr Alexandrovich**
**ul. 2 Parkovaya, 2/16**
**Moskovskaya obl. Mytischi, 141011(SU)**
Erfinder: **SAVCHUK, Valentin A.**
**Opytnaya stantsia VIR Globinsky raion**
**Poltavskaya obl. selo Ustimovka, 315967(SU)**
Erfinder: **VOSKOBOINIK, Leonid Konstantinovich**
**ul. Pushkina, 35-6**
**Krasnodar, 350023(SU)**
Erfinder: **FEDORENKO, Tatyana Sergeevna**
**ul. Shkolnaya, 11-23**
**Krasnodar, 350059(SU)**
Erfinder: **PROKOPENKO, Alexandra Ivanovna**
**ul. Peredovaya, 74-24**
**Krasnodar, 350038(SU)**
Erfinder: **PAKLIN, Sergei Ivanovich**
**ul. Malaya Filevskaya, 66-30**
**Moscow, 121433(SU)**
Erfinder: **NOVIKOVA, Svetlana Alexandrovna**
**ul. Shirokaya, 19-2-176**
**Moscow, 129224(SU)**
Erfinder: **ZHILINSKAYA, Tamara Dmitrievna**
**pr. Engelsa, 100-55**
**Leningrad, 194214(SU)**
Erfinder: **SCCHILIN, Evgeny Georgievich**

**deceased(SU)**
Erfinder: **GYSKA, Mikhail Nikolaevich**

**deceased(SU)**

(74) Vertreter: **von Füner, Alexander, Dr. et al**



Xerox Copy Centre

Patentanwälte v. Füner, Ebbinghaus, Finck
Mariahilfplatz 2 & 3
D-8000 München 90(DE)

## (54) VERFAHREN ZUR STERILISATION DER STAUBBEUTEL VON PFLANZEN.

(57) Die vorliegende Erfindung bezieht sich auf die Landwirtschaft, insbesondere auf Verfahren zur Sterilisation der Staubbeutel von Pflanzen.

Das Verfahren zur Sterilisation der Staubbeutel von Pflanzen sieht die Behandlung von Pflanzen mit einem Sterilisationsmittel in Verbindung mit einem Verdünner in der V. und/oder VI. Periode der Organogenese vor. Als Sterilisationsmittel verwendet man erfindungsgemäß Derivate von aliphatischen Alkoholen der allgemeinen Formel

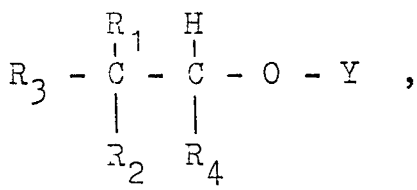

worin $R_1$ für H, Alkoxy, Alkylhalogenid, Methylbromid,
$R_2$ für H, Hydroxyl,
$R_3$ für H, Cl, $ClCH_2$, $C_2H_5$, $NO_2$

$A^-N^+H_3$, 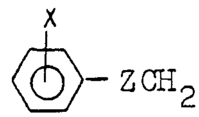

stehen, worin Z für 0 oder S steht,
$R_4$ H, $CH_3$

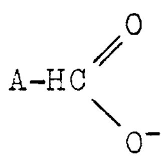 oder 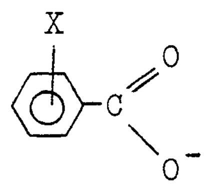

bedeutet, worin X H für F, Cl, OH, $NH_2$, $NO_2$ steht, Y für H, $-\underset{\overset{\|}{S}}{C}-SK$,

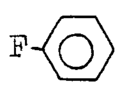 , 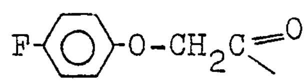 ,

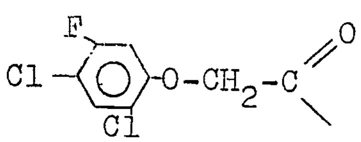 , 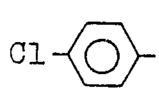 , 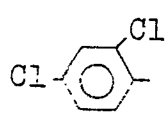

steht, oder $R_2$ - Y eine einfache Bindung darstellt, oder ihre Tiioanaloga oder ihre Gemische.
Die Erfindung wird in der Selektion und im Samebau zur Verwendung kommen.

# VERFAHREN ZUR STERILISATION DER STAUBBEUTEL VON PFLANZEN

## Gebiet der Technik

Die vorliegende Erfindung bezieht sich auf die Biologie und Landwirtschaft, insbesondere auf ein Verfahren zur Sterilisation der Staubbeutel von Pflanzen.

## Zugrundeliegender Stand der Technik

Heute wird weltweit die Aufgabe, die Landwirtschaft zu intensivieren, insbesondere die Ertragsfähigkeit von Getreide-, Futter-, Gemüse- und technischen Kulturen durch breite Verwendung von Hybriden der ersten Generation zu steigern, gelöst. Wegen ihrer Hybridkraft unterscheiden sich die Hybride von den Elternformen durch eine höhere Leistung (um 25 bis 30%) und eine bessere Produktqualität. Es besteht ein Verfahren zur Erzeugung von neuen Hybriden, welches auf einem System "Zytoplasmatische Pollensterilität 2 Restorer der Fertilität beruht. Diesem Verfahren liegt eine fortwährende (innerhalb von I2 bis I4 Jahren) und komplizierte Selektionsarbeit zugrunde, die das Schaffen von sterilen Analoga, Fixatoren der Sterilität und Restorern der Fertilität umfasst. Besonders aussichtsreich sind Verfahren, die auf der Sterilisation der Staubbeutel von Pflanzen mit chemischen Sterilisationsmitteln (Gametoziden) basieren. Die Verwendung von Gametoziden ist bedeutend wirtschaftlicher als die des Systems "zytoplasmatische Pollensterilität", weil die Notwendigkeit entfällt, solche Formen wie steriles Analogon, Analogon für die Fixierung der Sterilität bei mütterlichen Formen und für die Restauration der Fertilität bei väterlichen Formen zu erzeugen. Man kann praktisch die Samen von Hybriden der ersten Generation sowohl im Laufe der Selektionsforschung von Ausgangsformen als auch bei der Organisation ihrer technischen Herstellung gewinnen.

Zur Zeit sind etwa 200 Verbindungen gefunden, welche eine gametozide Aktivität besitzen und ihrer chemischen Struktur nach zu verschiedenen Klassen von chemischen Verbindungen gehören. Gametozide müssen die volle Pollensterilität bei behandelten Pflanzen unter Erhaltung der Lebensfähigkeit von Eizellen bewirken und eine

ausreichend hohe Fähigkeit (mindestens 70% der Kontrolle), den Fruchtknoten unter freier Bestäubung zu bilden, sicherstellen. Die Werte ihrer Phytotoxizität und Toxizität für Warmblüter müssen minimal sein.

Bekannt sind Verfahren zur Sterilisation der Staubbeutel von Getreidekulturen (L.Dzh.Nikell. Regulatory rosta rasteny. Primenenie v selskom khozyaitsve. Moskva, izdatelstvo "Kolos", I984, S. 28-3I; SU, A, 906457. L.Ju. Nikell. Wachstumsregulatoren von Pflanzen. Anwendung in der Landwirtschaft. Moskau, Verlag "Kolos", I984, S. 28-3I), welche in der Behandlung von Pflanzen mit Sterilisationsmitteln wie 2-Chloräthylphosphonsäure (Ethrel), Maleinsäurehydrazid, Di-(polyfluoralkyl)-phosphorsäuren und ihre Salze u.a. bestehen. Die Behandlung der Pflanzen mit Sterilisationsmitteln erfolgt in der V. oder VI. Periode der Organogenese (nach F.M.Kupermann).

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Staubblättern, Stempel und Blütenhülle. In der V. Periode tritt die Differenzierung des Höckers von Staubblättern in Staubfaden und Stempel in Erscheinung. Die VI. Periode ist durch Ablauf der Prozesse der Blütenbildung (Mikro- und Makrosporogenese) gekennzeichnet. In dieser Periode werden gesonderte einkernige Pollenkörner gebildet (F.M.Kupermann. Morfofiziologiya rasteny. Moskva, izdatelstvo "Vysshaya shkola", I973, S. 30-36. Morphophysiologie von Pflanzen. Moskau, Verlag "Vysshaya shkola", I973, S. 30-36).

Bekannt ist weiter ein Verfahren zur Sterilisation der Staubbeutel von Graspflanzen (GB, A, I567I53), das darin besteht, dass man die Behandlung von Graspflanzen mit einem Sterilisationsmittel in der Periode durchführt, die zwischen Auftreten des zweiten Stengelgliedes und Ährenschieben liegt. Als Sterilisationsmittel verwendet man heterozyklische Verbindungen, deren Hauptvertreter 2-Karboxy-3,4-methanpyrrolidin oder 2-Methoxykarbonyl-3,4-methanpyrrolidin sind. Die angegebenen Verbindungen werden in Kombination mit Verdünnungsmitteln und oberflächenaktiven Stoffen eingesetzt.

## Offenbarung der Erfindung

Der Erfindung liegt die Aufgabe zugrunde, durch die Wahl von neuen Sterilisationsmitteln ein Verfahren zu entwickeln, welches es möglich macht, dieses Verfahren zur Sterilisation von Staubbeuteln eines breiten Spektrums von Kulturen mit hohem Sterilisationsgrad unter Erhaltung der hohen Fähigkeit von Samen, Fruchtansätze bei freier Bestäubung zu bilden, zu verwenden.

Diese Aufgabe wird dadurch gelöst, dass im vorgeschlagenen Verfahren zur Sterilisation der Staubbeutel von Pflanzen durch ihre Behandlung mit einem Sterilisationsmittel in Verbindung mit einem Verdünner in der fünften und/oder sechsten Periode der Organogenese erfindungsgemäss als Sterilisationsmittel Derivate von aliphatischen Alkoholen der allgemeinen Formel

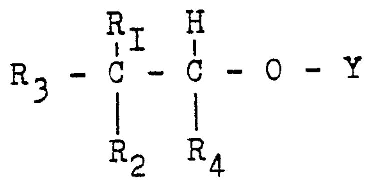

worin $R_I$ für H, Alkoxy, Alkylhalogenid, Methylbromid,
$R_2$ für H, Alkoxy, Hydroxyl,
$R_3$ für H, Cl, $ClCH_2$, $C_2H_5$, $NO_2$, $A^-$, $N^+H_3$,
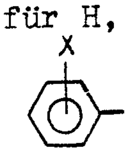 $ZCH_2$ stehen, worin Z für O oder S steht,

$R_4$ für H, $CH_3$,
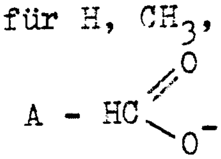 oder 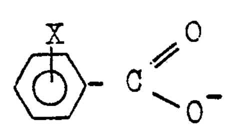

bedeutet, worin X - H, F, Cl, OH, $NH_2$, $NO_2$ bedeutet,

Y für H, 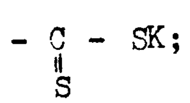 ; 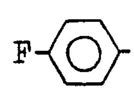, 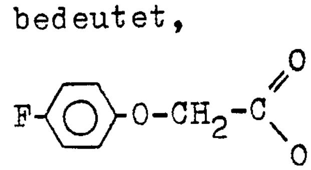,

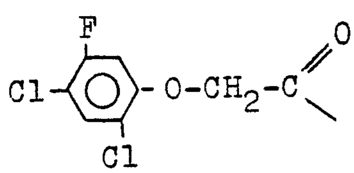, 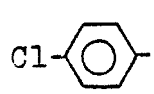, 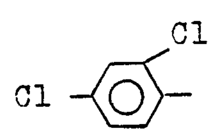

steht, oder $R_2$ - Y eine einfache Bindung darstellt, oder ihre Thioanaloga oder ihre Mischungen dienen.

Das Sterilisationsmittel kann in Verbindung mit einem beliebigen bekannten und dazu geeigneten Verdünner verwendet werden. Es ist zweckmässigerweise in Kombination mit Wasser als 0,I- bis 2%ige wässrige Emulsion zu verwenden. Als Pflanzen, die mit dem angegebenen Sterilisationsmittel behandelt werden, dienen bevorzugt Graspflanzen oder Sonnenblume.

Das erfindungsgemässe Verfahren ermöglicht, die Pollensterilität von Pflanzen (98 bis I00%) zu erzielen und einen hohen Prozentsatz der Fähigkeit zur Samenbildung (über 70%) zu erhalten. Zwecks Erzielung des hohen Sterilisationsgrades von Staubbeuteln unter ungünstigen Klimabedingungen wird die Behandlung von Pflanzen mit dem Sterilisationsmittel in der fünften und/oder sechsten Periode der Organogenese (nach Kupermann) wiederholt.

Beste Ausführungsvariante der Erfindung

Das erfindungsgemässe Verfahren wird wie folgt durchgeführt.

Pflanzen wie z.B. Winter- und Sommerweizen, diploider und tetraploider Roggen, Tritikale, Hirse, Sonnenblume, und andere werden mit einem Sterilisationsmittel behandelt, wobei als solches Derivate von aliphatischen Alkoholen der allgemeinen Formel

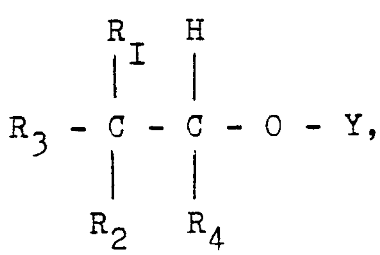

worin $R_I$ für H, Alkoxy, Alkylhalogenid, Methylbromid,
$R_2$ für H, Alkoxy, Hydroxyl,
$R_3$ für H, Cl, $ClCH_2$, $C_2H_5$, $NO_2$, $A^-N^+H_3$, 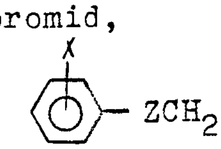

stehen, worin Z für O oder S steht, $R_4$ - H, $CH_3$, A 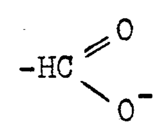

oder 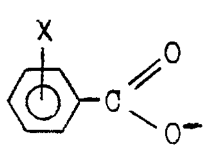

bedeutet, worin X = H, F, Cl, OH, $NH_2$, $NO_2$, Y-H, 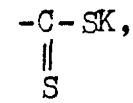,

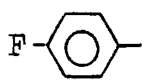 , 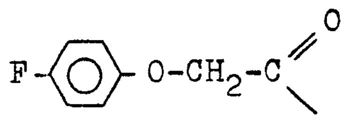 , 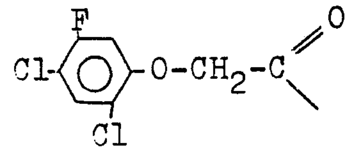 , 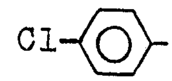 ,

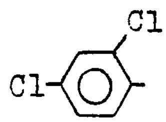 ;

ist, oder $R_2$ - Y eine einfache Bindung darstellt, oder ihre Thioanaloga oder ihre Mischungen dienen.

Derivate von aliphatischen Alkoholen können in Verbindung mit beliebigen geeigneten Verdünnern verwendet werden. Als Verdünner ist Wasser zweckmässigerweise zu benutzen. Dabei ist 0,I- bis 2%ige wässerige Emulsion der angegebenen Verbindungen vorteilhaft zu verwenden.

Man kann den gebrauchsfertigen Lösungen beliebige geeignete oberflächenaktive Stoffe wunschgemäss zusetzen. Beim Aufbringen auf die Pflanzen sind gewöhnlich den gebrauchsfertigen Lösungen beliebige bekannte Hilfszusätze wie Netzmittel, Dispergiermittel und Adhäsionsmittel zweckmässigerweise hinzuzufügen.

Das Sterilisationsmittel lässt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Aufwandmenge des Sterilisationsmittels hängt von der Natur der Verbindung, von zu behandelnder Kultur, Behandlungsperiode und natürlichen Klimafaktoren ab. Um den hohen Sterilisationseffekt unter ungünstigen Klimabedingungen sicherzustellen, ist es zweckmässig, die wiederholte Behandlung von Pflanzen in der VI. Periode der Organogenese durchzuführen. Die Gesamtdosis des Sterilisationsmittels beträgt 0,6 bis 20 kg/ha.

Alle erfindungsgemässen Derivate von aliphatischen Alkoholen oder ihre Thioanaloga, die als Sterilisationsmittel zur Verwendung kommen, waren auf die Toxizität im Tierversuch geprüft. Die Prüfergebnisse haben ergeben,

dass die angegebenen Verbindungen schwach toxisch oder praktisch nichttoxisch sind.

So sind, zum Beispiel, Trimethylolpropan, Pentaerythrit, Tetramethylolmethan, Brommethyl-tri(oxymethyl)-methan, I-Brom-2,2,2-trimethylol-äthan, I-Brom-2,2-dimethylol-butan sind praktisch nichttoxische Verbindungen. $LD_{50}$ von 2-Chloräthanol beträgt für weisse Mäuse 580 mg/kg Tiergewicht; $LD_{50}$ von Äthanolaminsalz der Tetrachlorphthalsäure beträgt für weisse Mäuse 500 bis 4000 mg/kg Tiergewicht; $LD_{50}$ von Äthanolaminsalz der 5-Aminosalizylsäure beträgt für weisse Mäuse 2400 mg/kg Tiergewicht; $LD_{50}$ von Äthanolaminsalz der p-Aminobenzoesäure beträgt für weisse Mäuse 2850 mg/kg Tiergewicht; $LD_{50}$ von Äthanolaminsalz der Benzoesäure beträgt für weisse Mäuse 4100 mg/kg Tiergewicht; $LD_{50}$ von Monoäthanolaminsalz der o-Fluorbenzoesäure beträgt für weisse Mäuse 700 mg/kg Tiergewicht; $LD_{50}$ von Diäthanolaminsalz der o-Fluorbenzoesäure beträgt für weisse Mäuse 500 mg/kg Tiergewicht; $LD_{50}$ von Monoäthanolaminsalz der p-Hydroxybenzoesäure beträgt für weisse Mäuse 3200 mg/kg Tiergewicht; $LD_{50}$ von Äthanolaminsalz der p-Chlorbenzoesäure beträgt für weisse Mäuse I200 mg/kg Tiergewicht; $LD_{50}$ von Monoäthanolaminsalz der Phthalsäure beträgt für weisse Mäuse II00 mg/kg Tiergewicht; $LD_{50}$ von 3-(4'-Chlorphenoxy)-propandiol-I,2- beträgt für weisse Mäuse 400 bis 600 mg/kg Tiergewicht; $LD_{50}$ von 3-Chlor-I,2-epoxypropan beträgt für weisse Mäuse 238 mg/kg Tiergewicht; $LD_{50}$ von 3-(4'-Nitrophenoxy )-propandiol-I,2 beträgt für weisse Mäuse 400 bis 600 mg/kg Tiergewicht; $LD_{50}$ von 3-(4'-Fluorphenoxy )-propandiol-I,2 beträgt für weisse Mäuse 400 bis 600 kg/kg Tiergewicht; $LD_{50}$ von 3-(4'-Fluorphenylthio)-propandiol-I,2 beträgt für weisse Mäuse etwa 400 mg/kg Tiergewicht; $LD_{50}$ von 3-(Fluorphenoxy)-propandiol-I,2 beträgt für weisse Mäuse 400 bis 600 mg/kg Tiergewicht; $LD_{50}$ von Kaliumäthylxanthogenat beträgt für Ratten I700 mg/kg Tiergewicht; $LD_{50}$ von Kaliumisopropylxanthogenat beträgt für Ratten 760 mg/kg Tiergewicht; $LD_{50}$ von p-Kaliumbutylxanthogenat beträgt für Ratten 760 mg/kg Tiergewicht; $LD_{50}$ von $\beta$-Chloräthylester der 2,4-Dichlor-

-5-fluorphenolxyeŝsigsäure beträgt für weisse Mäuse 500 mg/kg Tiergewicht; $LD_{50}$ von $\beta$-Chloräthylester der 4-Fluorphenoxyessigsäure beträgt für weisse Mäuse 400 mg/kg Tiergewicht; $LD_{50}$ von 4-Fluorphenoxyäthanol beträgt für weisse Mäuse 350 mg/kg Tiergewicht; $LD_{50}$ von 3-(4'-Fluorphenylthio)-propandiol-I,2 beträgt für weisse Mäuse 400 mg/kg Tiergewicht; $LD_{50}$ von 3-(3'-Chlorphenylthio)-propandiol-I,2 beträgt für weisse Mäuse 400 mg/kg Tiergewicht; $LD_{50}$ von 3-(2'-Fluorphenylthio)-propandiol-I,2 beträgt für weisse Mäuse 400 mg/kg Tiergewicht.

Die erfindungsgemässen Sterilisationsmittel, in deren allgemeinen Formel $R_I = R_2 = R_3$ Alkoxy, $R_I = R_2$ Alkoxy, $R_3$ Äthyl bedeuten, $R_4 = H$, $A = -O$, $Y = H$ sind, werden nach dem bekannten Verfahren durch Kondensation von Azetaldehyd oder Butyraldehyd mit überschüssigem Formaldehyd im Laufe der Katalyse durch Alkalien hergestellt.

Die erfindungsgemässen Sterilisationsmittel, in deren allgemeinen Formel $R_I = BrCH_2^-$, $R_2 = -CH_2OH$; $R_3 = -CH_2OH$ oder $-C_2H_5$ darstellen, werden nach der bekannten Technologie durch Ersetzen von alkoholischem Hydroxyl gegen Halogen bei der Einwirkung von Halogenwasserstoff hergestellt.

Die erfindungsgemässen Sterilisationsmittel, in deren allgemeinen Formel $R_I = R_2 = R_4 = H$, $R_3 = Cl$, $Y = H$ sind, werden nach dem bekannten Verfahren durch Umsetzung von Äthylenoxid mit Chlorwasserstoff hergestellt.

Die erfindungsgemässen Sterilisationsmitte, in deren allgemeinen Formel $R_I = H$, $R_3 = Cl$, $R_4 = H$ darstellen, $Y - R_2$, genommen zusammen, eine einfache Bindung bilden, werden nach dem bekannten Verfahren durch alkalische Dehydrochlorierung von Glyzerindichydrochlorid hergestellt.

Die erfindungsgemässen Sterilisationsmittel, in deren allgemeinen Formel $R_I = R_2 = R_4 = Y = H$ sind und

$R_3 = HCOONH_3$, 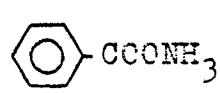, 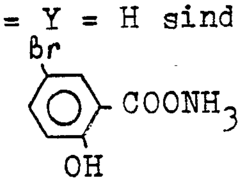

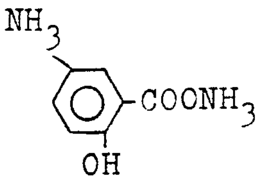, 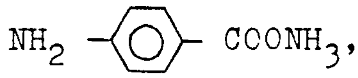, 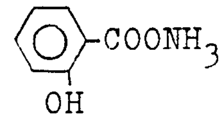 ,

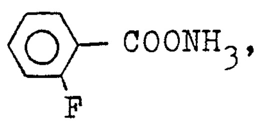, 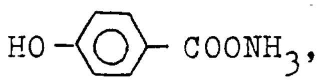, 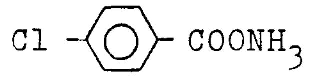,

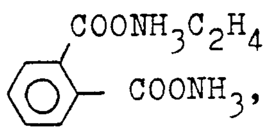, 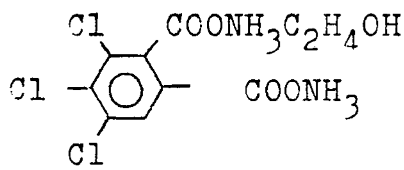 ,

bedeutet, werden durch Umsetzung äquimolarer Mengen der entsprechenden organischen Säuren und des Monoäthanolamins in wässrigen Lösungen hergestellt.

Die erfindungsgemässen Sterilisationsmittel, in deren allgemeinen Formel $R_I$ = H, $R_2$ = OH, $R_3$ = $CH_2OH$, $R_4$=H,

Y = 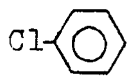 , 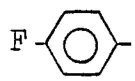 , 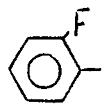 , 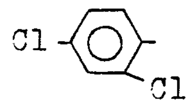 , 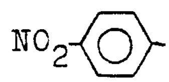,

bedeuten, werden nach dem bekannten Verfahren durch Umsetzung von Alkalimetallphenolaten mit α -Clyzerinmonochlorhydrin hergestellt.

Die erfindungsgemässen Sterilisationsmittel, in deren allgemeinen Formel $R_I$ = $R_4$ = Y = H, $R_2$ = OH,

$R_3$ = 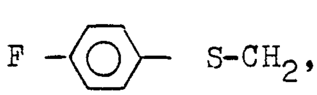, 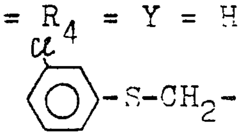, 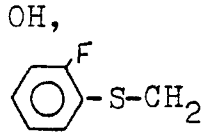

sind, werden nach dem bekannten Verfahren durch Umsetzung der entsprechenden Natriumthiophenolaten mit α -Glyzerinmonochlorhydrin hergestellt.

Die erfindungsgemässen Sterilisationsmittel, in deren allgemeinen Formel $R_I$ = $R_2$ = H, $R_3$ = H, $-CH_2CH_3$, $R_4$ = H, $CH_3$ sind und Y = 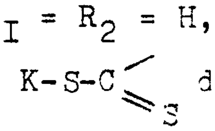 darstellt, werden nach den bekannten Verfahren durch Umsetzung von I Mol Äthzkalilösung in entsprechendem Alkohol mit I Mol Schwefelkohlenstoff hergestellt:

Die erfindungsgemässen Sterilisationsmittel, in deren allgemeinen Formel $R_I$=$R_2$=$R_4$=Y=H, $R_3$ = 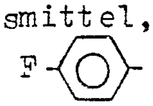

sind, werden nach dem bekannten Verfahren durch Umsetzung von 4-Natriumfluorphenolat mit Äthylenchlorhydrin hergestellt.

Die erfindungsgemässen Sterilisationsmittel, in deren allgemeinen Formel $R_I = R_2 = R_4 = H$, $R_3 = Cl$,

Y = 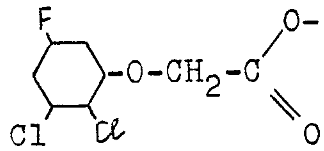 darstellen, werden nach dem bekannten Verfahren durch Umsetzung von 2,4-Dichlor-5-fluorphenoxy -axetylchlorid mit 2-Chloräthanol hergestellt.

Die erfindungsgemässen Sterilisationsmittel, in deren allgemeinen Formel $R_I = R_2 = R_4 = H$, $R_3 = Cl$,

Y = 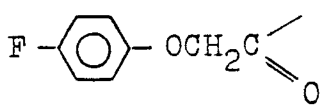 darstellen, werden durch Umsetzung von 4-Fluorphenoxyazetylchlorid mit Äthylenchlorhydrin hergestellt.

Die gametozide Aktivität der erfindungsgemässen Sterilisationsmittel ist im Feldversuch in verschiedenen bodenklimatischen Zonen mit Teilstücken von IO $m^2$ Grösse in zwei bis drei- bis viermaliger Wiederholung festgestellt. Jedes Sterilisationsmittel wurde mindestens 5 Jahre lang geprüft.

Die Entwicklung der Perioden der Organogenese wird zytologisch überwacht. Die Behandlung von Pflanzen mit dem Sterilisationsmittel erfolgt am Anfang der fünften Periode der Organogenese (nach Kupermann).

Mit dem Ährenschieben verwirklicht man die Isolierung von Hauptähren und anderen Stockwerken in Pergamentbeuteln. Bei Weizen und Tritikale werden Einzelisolatoren verwendet. Bei Roggen schliesst man 5 bis 7 verschiedene nebeneinander befindliche Pflanzen je Ähre in einen gemeinsamen Isolator ein. Bei Hirse wird jede Rispe getrennt isoliert. Der Sterilitätsprozentsatz (X) für Weizen, Roggen, Tritikale und Hirse wird nach der Formel

$$X = \left(I - \frac{\text{Anzahl der in einem Isolator befruchteten Samen von behandelten Pflanzen}}{\text{Anzahl der in einem Isolator befruchteten Samen von unbehandelten Kontrollpflanzen}}\right) \cdot 100\%$$

ermittelt.

Die Kornzahl der nicht isolierten Ähren von Kontrollpflanzen wird bedingt für 100% Ansetzen bei freier Bestäubung angenommen.

Um zuverlässige Angaben zu erhalten, verwendet man 20 bis 25 Isolatoren jeder Wiederholung für Weizen und Tritikale, 10 bis 15 Isolatoren jeder Wiederholung für Roggen und Hirse.

Zur Kontrolle der chemischen Sterilisation des Sonnenblumenpollens werden für jede Verbindung 45 behandelte Pflanzen jeder Wiederholung verwendet, wobei 15 Pflanzen von denen zwecks Selbstbestäubung isoliert werden, Blütenkörbchen von 15 anderen Pflanzen mit einem Pollengemisch, gesammelt von 20 bis 25 behandelten isolierten Körbchen, bestäubt werden, und 15 Pflanzen für freie Bestäubung gelassen werden, damit das Ansetzen von Achänen mit dem Pollen der väterlichen Vaterform kontrolliert werden kann.

Man beurteilt die Pollensterilität von Pflanzen der Sonnenblume nach der Pollenfertilität und -keimfähigkeit, nach den morphologischen Besonderheiten von Spermien und nach der Fähigkeit von Achänen zum Ansetzen bei der Bestäubung der behandelten isolierten Pflanzen mit dem Pollen der unbehandelten väterlichen Form. Die Lebensfähigkeit der Eizelle wird nach der Samenbildung von behandelten Pflanzen bei freier Bestäubung mit der väterlichen Form bestimmt.

Es ist wünschenswert, die Behandlung von Pflanzen bei heiterem windstillem Wetter durchzuführen.

Zum besseren Verstehen der vorliegenden Erfindung werden folgende Ausführungsbeispiele für das erfindungsgemässe Verfahren angeführt.

Beispiele 1 bis 14

Pflanzen des Winterweizens Sorte Mironovskaya 808 werden in der V. oder VI. Periode der Organogenese durch

Zerstäubung der 2%igen wässrigen Emulsion von:
β-Chloräthylester der 4-Fluorphenoxyessigsäure (Beispiel I);
4-Fluorphenoxyäthylalkohol (Beispiel 2);
3-(4'-Chlorphenoxy)-propandiol-I,2 (Beispiel 3);
3-(4'-Fluorphenoxy)-propandiol-I,2 (Beispiel 4);
Kaliumisopropylxanthogenat (Beispiel 5);
3-(2',4'-Dichlorphenoxy)-propandiol-I,2 (Beispiel 6);
3-(2'-Fluorphenylthio)-propandiol-I,2 (Beispiel 7);
3-(3'-Chlorphenylthio)-propandiol-I,2 (Beispiel 8);
3-(4'-Nitrophenoxy)-propandiol-I,2 (Beispiel 9);
β-Chloräthylester der 2,4-Dichlor-5-fluorphenoxyessigsäure (Beispiel IO);
3-Chlor-I,2-epoxypropan (Beispiel II);
Kaliumäthylxantogenat (Beispiel I2);
3-(4'-Fluorphenylthio)-propandiol-I,2 (Beispiel I3);
Monoäthanolaminsalz der Orthofluorbenzoesäure (Beispiel I4)
mit Hilfe einer Rückenspritze behandelt.

Als Emulgiermittel wird 0,I Masse% Kalziumalkylbenzolsulfonat mit I2 bis I4 Kohlenstoffatomen hinzugefügt.

Als Adjuvans führt man in die Emulsion 0,0I Masse% Dimethylfoxid ein.

Der Verbrauch an Präparat beträgt 20 kg/ha. Als Kontrolle dienen Pflanzen, behandelt mit einem Verdünner ohne Sterilisationsmittel.

Die Prüfergebnisse sind in der Tabelle I angegeben.

Tabelle I

| Lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | 2 | 3 | 4 | 5 | 6 |
| | Sommerweizen Sorte Mironovskaya 808 | | | | |
| I | Kontrolle | 37,5 | 0,0 | 40,5 | I00,0 |
| 2 | Beispiel I | 0,I | 99,8 | 30,4 | 75,I |
| 3 | Beispiel 2 | 0,0 | I00 | 27,4 | 67,7 |
| 4 | Beispiel 3 | 0,6 | 98,4 | 28,6 | 70,6 |
| 5 | Beispiel 4 | 0,0 | I00 | 30,6 | 75,4 |
| 6 | Beispiel 5 | 2,3 | 93,7 | 35,2 | 86,2 |
| 7 | Beispiel 6 | 0,8 | 97,9 | 35,0 | 86,4 |
| 8 | Beispiel 7 | 0,0 | I00 | 36,7 | 90,6 |
| 9 | Beispiel 8 | 2,6 | 93,I | 32,7 | 80,7 |
| I0 | Beispiel 9 | 4,8 | 85,2 | 34,0 | 83,9 |
| II | Beispiel I0 | 0,6 | I00 | 30,I | 74,3 |
| I2 | Beispiel II | 0,I | 99,8 | 3I,4 | 77,5 |
| I3 | Beispiel I2 | 0,0 | I00 | 30,7 | 75,8 |
| I4 | Beispiel I3 | 3,2 | 9I,5 | 38,2 | 94,3 |
| I5 | Beispiel I4 | 5,3 | 85,9 | 36,2 | 89,3 |

Beispiele I5 bis 26

Pflanzen des Sommerweizens Sorte Moskovskaya 35 werden in der V. Periode der Organogenese (nach Kupermann) mit einer I%igen wässrigen Emulsion von 3-(3-Chlorphenylthio)-propandiol-I,2 (Beispiel I5); 3-(2,4-Dichlorphenoxy)-propandiol-I,2 (Beispiel I6); Kaliumisopropylxanthogenat (Beispiel I7); Äthanolaminsalz der 5-Bromsalizylsäure (Beispiel I8); 3-(2'-Fluorphenylthio)-propandiol-I,2 (Beispiel I9); 3-(4'-Chlorphenoxy)-propandiol-I,2 (Beispiel 20); 3-(2'-Fluorphenoxy)-propandiol-I,2 (Beispiel 2I); Kaliumäthylxanthogenat (Beispiel 22); β-Chloräthylester der 4-Fluorphenoxyessigsäure (Beispiel 23); Diäthanolaminat der o-Fluorbenzoesäure (Beispiel 24); 3-(4'-Fluorphenylthio)-propandiol-I,2 (Beispiel 25); 3-(4'-Fluorphenoxy)-propandiol-I,2 (Beispiel 26) behandelt. Die

Emulsion enthält 0,I Masse% Kalziumalkylbenzolsulfonat mit I2 bis I4 Kohlenstoffatomen als Emulgiermittel und 0,0I Masse% N,N-Dimethylformamid als Adjuvans. Der Verbrauch an Präparat beträgt I0 kg/ha. Als Kontrolle dienen Pflanzen, behandelt mit einem Verdünner ohne Sterilisationsmittel. Die Prüfergebnisse sind in der Tabelle 2 angegeben.

Tabelle 2

| Lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| | Sommerweizen Sorte Moskovskaya 35 | | | | |
| I | Kontrolle | 27,I | 0,0 | 27,5 | I00 |
| 2 | Beispiel I5 | 0,8 | 99,7 | 24,6 | 89,5 |
| 3 | Beispiel I6 | 0,I | 99,9 | 26,0 | 94,5 |
| 4 | Beispiel I7 | 2,3 | 9I,5 | 24,9 | 90,5 |
| 5 | Beispiel I8 | I,8 | 93,4 | 27,9 | I0I,5 |
| 6 | Beispiel I9 | 0,0 | I00 | 24,6 | 89,5 |
| 7 | Beispiel 20 | 0,0 | I00 | 25,8 | 93,8 |
| 8 | Beispiel 2I | 0,I | 99,9 | 26,2 | 95,3 |
| 9 | Beispiel 22 | 0,0 | I00 | 25,6 | 93,I |
| I0 | Beispiel 23 | 0,4 | 98,5 | 23,8 | 86,5 |
| II | Beispiel 24 | 2,2 | 9I,9 | 27,I | 98,5 |
| I2 | Beispiel 25 | 2,0 | 92,3 | 26,4 | 96,0 |
| I3 | Beispiel 26 | 0,4 | 98,6 | 25,9 | 94,2 |

Beispiele 27 bis 29

Pflanzen von diploidem Roggen Sorte Gibrid I864/74 werden in der V. Periode der Organogenese (nach Kupermann) mit einer I%igen wässrigen Emulsion von 4-Fluorphenoxyäthylalkohol (Beispiel 27); Monoäthanolaminat der p-Hydroxybenzoesäure (Beispiel 28); 3-(4'-Fluorphenoxy)-propandiol-I,2 (Beispiel 29) behandelt. Die Emulsion enthält 0,I Masse% Kalziumalkylbenzolsulfonat mit I2 bis I4 Kohlenstoffatomen und 0,0I Masse% Dodezylsulfat. Als Kontrol-

le dienen Pflanzen, behandelt mit einem Verdünner ohne Sterilisationsmittel. Der Verbrauch an Präparat beträgt I0 kg/ha.

Die Prüfergebnisse sind in der Tabelle 3 angegeben.

Beispiele 30 bis 32

Pflanzen von diploidem Roggen Sorte Kharkovskaya 55 werden in der V. und VI. Perioden der Organogenese (nach Kupermann) mit einer I%igen wässrigen Emulsion von β-Chloräthylester der 4-Fluorphenoxyessigsäure (Beispiel 30); Äthanolaminsalz der Benzoesäure (Beispiel 3I); 3-(2,4-Dichlorphenoxy)-propandiol-I,2 (Beispiel 32) behandelt. Die Emulsion enthält 0,I Masse% Kalziumalkylbenzolsulfonat mit I2 bis I4 Kohlenstoffatomen als Emulgiermittel und 0,0I Masse% Tetrahydrofuran als Adjuvans.

Der Verbrauch an Sterilisationsmittel beträgt 6 kg/ha. Als Kontrolle dienen Pflanzen, behandelt mit einem Verdünner ohne Sterilisationsmittel.

Die Pfüfergebnisse sind in der Tabelle 4 angegeben.

Beispiele 33 bis 36

Pflanzen von diploidem Roggen Sorte Voskhod 2 werden in der V. oder VI. Periode der Organogenese mit einer I%igen wässrigen Emulsion von 3-Chlor-I,2-epoxypropan (Beispiel 33); Äthanolaminsalz der Tetraphthalsäure (Beispiel 34); Äthanolaminsalz der 4-Chlorbenzoesäure (Beispiel 35); 3-(2'-Fluorphenoxy)-propandiol-I,2 (Beispiel 36) behandelt.

Die Emulsion enthält 0,I Masse% Kalziumalkylbenzolsulfonat mit I2 bis I4 Kohlenstoffatomen als Emulgiermittel und 0,0I Masse% Äthylenglykol als Adjuvans. Als Kontrolle dienen Pflanzen, behandelt mit einem Verdünner ohne Sterilisationsmittel. Der Verbrauch an Sterilisationsmittel beträgt 8 kg/ha.

Die Prüfergebnisse sind in der Tabelle 5 angegeben.

Beispiele 37 bis 4I

Pflanzen von diplodidem Roggen Sorte Gibrid 3[illegible]/65 werden in der V. und VI. Perioden der Organogenese (nach Kupermann) mit einer I%igen wässrigen Emulsion von β-Chloräthylester der 4-Fluorphenoxyessigsäure (Beispiel 37); Äthanolaminsalz der p-Aminobenzoesäure (Beispiel 38); Ätriol (Beispiel 39); 3-(4'-Nitrophenoxy)-pro-

pandiol-I,2 (Beispiel 40); Kaliumisopropylxanthogenat (Beispiel 4I) behandelt.

Die Emulsion enthält 0,I Masse% Kalziumlakylbenzolsulfonat mit I2 bis I4 Kohlenstoffatomen als Emulgiermittel und 0,0I Masse% Dimethylformamid als Adjuvans. Als Kontrolle dienen Pflanzen, behandelt mit einem Verdünner ohne Sterilisationsmittel.

Der Verbrauch an Sterilisationsmittel beträgt IO kg/ha.

Die Prüfergebnisse sind in der Tabelle 6 angegeben.

Beispiele 42 bis 56

Pflanzen von diploidem Roggen Sorte Chulpan werden in der V. oder VI. Periode der Organogenese mit einer I%igen wässrigen Emulsion von 4-Fluorphenoxyäthylalkohol (Beispiel 42); Kaliumisopropylxanthogenat (Beispiel 43); Kaliumbutylxanthogenat (Beispiel 44); 2-Chloräthanol (Beispiel 45); 3-(4'-Chlorphenoxy)-propandiol-I,2 (Beispiel 46); 3-Chlor-I,2-epoxypropan (Beispiel 47); Monoäthanolaminsalz der Ameisensäure (Beispiel 48); 3-(4'-Nitrophenoxy)-propandiol-I,2 (Beispiel 49); 3-(3'-Chlorphenylthio)-propandiol-I,2 (Beispiel 50); Äthanolaminsalz der 5-Aminosalizylsäure (Beispiel 5I); 3-(2'-Fluorphenylthio)-propandiol-I,2 (Beispiel 52); monobromsubstituiertem Etriol (Beispiel 53); Diäthanolaminat der o-Fluorbenzoesäure (Beispiel 54); Phthalsäuremonoäthanolaminsalz (Beispiel 55); Monoäthanolaminsalz der o-Fluorbenzoesäure (Beispiel 56) behandelt.

Die Emulsion enthält 0,I Masse% Kalziumalkylbenzolsulfonat mit I2 bis I4 Kohlenstoffatomen als Emulgiermittel und 0,0I Masse% Dimethylsulfoxid als Adjuvans.

Als Kontrolle dienen Pflanzen, behandelt mit einem Verdünner ohne Sterilisationsmittel.

Der Verbrauch an Sterilisationsmittel beträgt IO kg/ha.

Die Prüfergebnisse sind in der Tabelle 7 angegeben.

Tabellen

| Lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| Tabelle 3 | | Diploider Roggen Sorte Gibrid I864/74 | | | |
| I | Kontrolle | 4I,I | 0,0 | 47,8 | I00,0 |
| 2 | Beispiel 27 | 0,0 | I00 | 42,0 | 87,9 |
| 3 | Beispiel 28 | I,8 | 95,6 | 46,7 | 97,7 |
| 4 | Beispiel 29 | 0,0 | I00 | 42,8 | 88,2 |
| Tabelle 4 | | Diploider Roggen Sorte Kharkovskaya 55 | | | |
| I | Kontrolle | 42,I | 0,0 | 45,I | I00,0 |
| 2 | Beispiel 30 | 0,0 | I00 | 42,7 | 94,7 |
| 3 | Beispiel 3I | 0,9 | 97,9 | 43,7 | 96,9 |
| 4 | Beispiel 32 | 0,0 | I00 | 4I,6 | 90,2 |
| Tabelle 5 | | Liploider Roggen Sorte Voskhod 2 | | | |
| I | Kontrolle | 49,0 | 0,0 | 54,6 | I00 |
| 2 | Beispiel 33 | 0,6 | 98,8 | 5I,7 | 94,7 |
| 3 | Beispiel 34 | I,2 | 97,6 | 54,0 | 98,9 |
| 4 | Beispiel 35 | 3,5 | 92,9 | 53,6 | 98,2 |
| 5 | Beispiel 36 | 0,3 | 99,4 | 46,8 | 85,7 |
| Tabelle 6 | | Diploider Roggen Sorte Gibrid 340/65 | | | |
| I | Kontrolle | 48,2 | 0,0 | 54,0 | I00 |
| 2 | Beispiel 37 | 0,0 | I00 | 45,6 | 84,4 |
| 3 | Beispiel 38 | 3,2 | 93,4 | 52,8 | 97,8 |
| 4 | Beispiel 39 | I,6 | 96,7 | 53,2 | 98,5 |
| 5 | Beispiel 40 | 0,0 | I00 | 45,0 | 84,I |
| 6 | Beispiel 4I | 0,0 | I00 | 44,8 | 83,6 |

Beispiele 57 bis 59

Pflanzen von tetraploidem Roggen Sorte Jubileinaya werden in der V. oder VI. Periode der Organogenese (nach Kupermann) mit einer I%igen wässrigen Emulsion von 3-(2'-Fluorphenoxy)-propandiol-I,2 (Beispiel 57); Pentaerythrit (Beispiel 58); Monoäthanolaminsalz der Phthalsäure (Beispiel 59) behandelt.

Die Emulsion enthält 0,I Masse% Kalziumalkylbenzolsulfonat mit I2 bis I4 Kohlenstoffatomen als Emulgiermittel und 0,0I Masse% Dodezylsulfat als Adjuvans.

Als Kontrolle dienen Pflanzen, behandelt mit einem Verdünner ohne Sterilisationsmittel.

Der Verbrauch an Sterilisationsmittel beträgt IO kg/ha.

Die Prüfergebnisse sind in der Tabelle 8 angegeben.

Tabelle 7

| Lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | 2 | 3 | 4 | 5 | 6 |
| | Diploider Roggen Sorte Chulpan | | | | |
| | Kontrolle | 52,0 | 0,0 | 56,6 | IOO |
| 1 | Beispiel 42 | 0,0 | IOO | 48,2 | 85,0 |
| 2 | Beispiel 43 | 0,3 | 99,4 | 5I,8 | 9I,4 |
| 3 | Beispiel 44 | 2,6 | 96,2 | 48,0 | 84,7 |
| 4 | Beispiel 45 | 2,2 | 95,8 | 80,2 | 88,5 |
| 5 | Beispiel 46 | 0,0 | IOO | 47,2 | 83,2 |
| 6 | Beispiel 47 | 0,0 | IOO | 48,9 | 86,2 |
| 7 | Beispiel 48 | I,2 | 97,7 | 55,2 | 97,4 |
| 8 | Beispiel 49 | 0,7 | 98,7 | 5I,7 | 9I,2 |
| 9 | Beispiel 50 | 0,0 | IOO | 52,I | 9I,9 |
| 10 | Beispiel 5I | 2,I | 96,0 | 55,6 | 92,8 |
| 11 | Beispiel 52 | 0,6 | 98,8 | 53,4 | 94,2 |
| 12 | Beispiel 53 | 4,8 | 9I,8 | 55,8 | 98,4 |
| 13 | Beispiel 54 | 0,0 | IOO | 54,0 | 95,2 |
| 14 | Beispiel 55 | 3,I | 94,0 | 55,6 | 98,I |
| 15 | Beispiel 56 | 0,I | 99,8 | 56,2 | 99,I |

Beispiele 60 bis 62

Pflanzen von tetraploidem Roggen Sorte Gibrid 67

werden in der V. oder VI. Periode der Organogenese (nach Kupermann) mit einer I%igen wässrigen Emulsion von 3-(2'-Fluorphenylthio)-propandiol-I,2 (Beispiel 60); Monoäthanolaminsalz der p-Hydroxybenzoesäure (Beispiel 6I); Äthanolaminsalz der Salizylsäure (Beispiel 62) behandelt.

Die Emulsion enthält 0,I Masse% Kalziumalkylsulfonat mit I2 bis I4 Kohlenstoffatomen als Emulgiermittel und 0,0I Masse% Dimethylsulfoxid als Adjuvans.

Als Kontrolle dienen Pflanzen, behandelt mit einem Verdünner ohne Sterilisationsmittel.

Der Verbrauch an Sterilisationsmittel beträgt I0 kg/ha.

Die Prüfergebnisse sind in der Tabelle 9 angegeben.

Beispiele 63 bis 66

Pflanzen von tetraploidem Roggen Sorte Ukrainskaya tetra werden in der V. oder VI. Periode der Organogenese (nach Kupermann) mit einer I%igen wässrigen Emulsion von 3-(4'-Chlorphenoxy)-propandiol-I,2 (Beispiel 63); Äthanolaminsalz der 5-Bromsalizylsäure (Beispiel 64); Äthanolaminsalz der Benzoesäure (Beispiel 65); Kaliumäthylxantrhogenat (Beispiel 66) behandelt.

Die Emulsion enthält 0,I Masse% Kalziumalkylbenzolsulfonat mit I2 bis I4 Kohlenstoffatomen und 0,0I Masse% Tetrahydrofuran.

Als Kontrolle dienen Pflanzen, behandelt mit einem Verdünner ohne Sterilisationsmittel.

Der Verbrauch an Sterilisationsmittel beträgt I0 kg/ha.

Die Prüfergebnisse sind in der Tabelle I0 angegeben.

Tabellen

| Lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | 2 | 3 | 4 | 5 | 6 |
| Tabelle 8 | | Tetraploider Roggen Sorte Jubileinaya | | | |
| Kontrolle | | 44,7 | 0,0 | 48,3 | I00,0 |
| I | Beispiel 57 | 0,0 | I00 | 47,I | 97,5 |
| 2 | Beispiel 58 | 0,4 | 9I,I | 45,6 | 94,4 |
| 3 | Beispiel 59 | 0,0 | I00 | 46,0 | 95,0 |
| Tabelle 9 | | Tetraploider Roggen Sorte Gibrid 67 | | | |
| Kontrolle | | 4I,4 | 0,0 | 44,7 | I00,0 |
| I | Beispiel 60 | 0,0 | I00 | 42,2 | 94,4 |
| 2 | Beispiel 6I | 0,I | 99,7 | 4I,7 | 93,4 |
| 3 | Beispiel 62 | 0,0 | I00 | 40,8 | 9I,3 |
| Tabelle I0 | | Tetraploider Roggen Sorte Ukrainskaya tetra | | | |
| Kontrolle | | 42,5 | 0,0 | 44,2 | I00 |
| I | Beispiel 63 | 0,0 | I00 | 40,7 | 92,I |
| 2 | Beispiel 64 | 0,I | 99,8 | 4I,9 | 94,7 |
| 3 | Beispiel 65 | 0,8 | 98,2 | 44,0 | 99,5 |
| 4 | Beispiel 66 | 0,0 | I00 | 43,9 | 99,3 |

Beispiele 67 bis 75

Pflanzen von tetraploidem Roggen Sorte Belta werden in der V. oder VI. Periode der Organogenese (nach Kupermann) mit einer I%igen wässrigen Emulsion von 3-(4'-Nitrophenoxy)-propandiol-I,2 (Beispiel 67); 2-Chloräthan (Beispiel 68); 3-(2'-Fluorphenoxy)-propandiol-I,2 (Beispiel 69); Äthanolaminsalz der 5-Aminosalizylsäure (Beispiel 70); Monoäthanolaminsalz der o-Fluorbenzoesäure (Beispiel 7I); Kaliumäthylxantogenat (Beispiel 72); Monoäthanolaminsalz der Phthalsäure (Beispiel 73); Diäthanolaminsälz der o-Fluorbenzoesäure (Beispiel 74); 4-Fluorphenoxyäthylalkohol (Beispiel 75) behandelt.

Die Emulsion enthält 0,I Masse% Kalziumalkylbenzolsulfonat mit I2 bis I4 Kohlenstoffatomen als Emulgiermittel und 0,0I Masse% Dimethylsulfoxid als Adjuvans.

Als Kontrolle dienen Pflanzen, behandelt mit einem Verdünner ohne Sterilisationsmittel.

Der Verbrauch an Sterilisationsmittel beträgt I0 kg/ha.

Die Prüfergebnisse sind in der Tabelle II angegeben.

Beispiele 76 bis 79

Pflanzen von Tritikale Sorte PRAG I09 werden in der V. und VI. Periode der Organogenese (nach Kupermann) mit einer I%igen wässrigen Emulsion von 4-Fluorphenoxyäthylalkohol (Beispiel 76); Monoäthanolaminsalz der Ameisensäure (Beispiel 77); Etriol (Beispiel 78); 3-(4'-Chlorphenoxy)-propandiol-I,2 (Beispiel 79) behandelt. Die Emulsion enthält 0,I Masse% Kalziumalkylbenzolsulfonat mit I2 bis I4 Kohlenstoffatomen als Emulgiermittel und 0,0I Masse% Dodezylsulfat als Adjuvans.

Als Kontrolle dienen Pflanzen, behandelt mit einem Verdünner ohne Sterilisationsmittel.

Der Verbrauch an Sterilisationsmittel beträgt I2 kg/ha.

Die Prüfergebnisse sind in der Tabelle I2 angegeben.

Tabellen

| Lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | 2 | 3 | 4 | 5 | 6 |
| **Tabelle II** | **Tetraploider Roggen Sorte Belta** | | | | |
| Kontrolle | | 40,0 | 0,0 | 44,3 | I00,0 |
| I | Beispiel 67 | 0,0 | I00 | 39,7 | 89,6 |
| 2 | Beispiel 68 | 0,0 | I00 | 42,2 | 95,3 |
| 3 | Beispiel 69 | 0,0 | I00 | 40,7 | 9I,9 |
| 4 | Beispiel 70 | I,I | 97,3 | 44,I | 99,5 |
| 5 | Beispiel 7I | 0,0 | I0,0 | 43,5 | 98,2 |
| 6 | Beispiel 72 | 0,0 | I00 | 39,I | 88,3 |
| 7 | Beispiel 73 | 0,3 | 99,3 | 44,0 | 99,3 |
| 8 | Beispiel 74 | 0,9 | 97,8 | 43,8 | 98,9 |
| 9 | Beispiel 75 | 0,0 | I00 | 4I,I | 92,8 |
| **Tabelle I2** | **Tritikale Sorte PRAG I09** | | | | |
| Kontrolle | | 68,2 | 0,0 | 69,0 | I00 |
| I | Beispiel 76 | 0,0 | I00 | 62,3 | 90,3 |
| 2 | Beispiel 77 | 0,I | 99,9 | 64,I | 92,9 |
| 3 | Beispiel 78 | 0,7 | 99,0 | 68,2 | 98,8 |
| 4 | Beispiel 79 | 0,0 | I00 | 6I,4 | 89,0 |

Beispiel 80 bis 89

Pflanzen von diploidem Roggen Sorte Chulpan werden mit einer I%igen wässrigen Emulsion behandelt, welche eine Mischung aus folgenden Verbindungen enthält:

Beispiel 80: 4-Fluorphenoxyäthylalkohol und Etriol in einem Verhältnis von I:3.

Beispiel 8I: 3-(4'-Chlorphenoxy)-propandiol-I,2 und Monoäthanolaminsalz der Phthalsäure in einem Verhältnis von I:3.

Beispiel 82: Kaliumäthylxanthogenat und 2-Chloräthanol in einem Verhältnis von I:3.

Beispiel 83: 3-(4'-Nitrophenoxy)-propandiol-I,2 und

Äthanolaminsalz der 4-Aminobenzoesäure in einem Verhältnis von I:3.

Beispiel 84: 3-(4'-Fluorphenoxy)-propandiol-I,2 und Monoäthanolaminsalz der Orthofluorbenzoesäure in einem Verhältnis von I:3.

Beispiel 85: 3-(2'-Fluorphenylthio)-propandiol-I,2 und Äthanolaminsalz der 4-Chlorbenzoesäure in einem Verhältnis von I:3.

Beispiel 86: 3-(3'-Chlorphenylthio)-propandiol-I,2 und monobromsubstituiertes Pentaerythrit in einem Verhältnis von I:3.

Beispiel 87: Kaliumsopropylxanthogenat und Äthanolaminsalz der Ameisensäure in einem Verhältnis von I:3.

Beispiel 88: 3-Chlor-I,2-epoxypropan und Äthanolaminsalz der Salizylsäure in einem Verhältnis von I:3.

Beispiel 89: 3-(2'-Fluorphenoxy)-propandiol-I,2 und Äthanolaminsalz der 5-Bromsalizylsäure in einem Verhältnis von I:3.

Jede Emulsion enthält 0,I Masse% Kalziumalkylbenzolsulfonat mit I2 bis I4 Kohlenstoffatomen als Emulgiermittel und 0,0I Masse% Dimethylsulfoxid als Adjuvans. Als Kontrolle dienen Pflanzen, behandelt mit einem Lösungsmittel ohne Sterilisationsverbindungen. Der Verbrauch an Sterilisationsmitteln beträgt I0 kg/ha.

Die Prüfergebnisse sind in der Tabelle I3 angegeben.

Tabelle I3

| Lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens bei freier Bestäubung |
|---|---|---|---|---|---|
| 1 | 2 | 3 | 4 | 5 | 6 |
| | Diploider Roggen Sorte Shulpan | | | | |
| I | Kontrolle | 52,0 | 0,0 | 56,7 | I00 |
| 2 | Beispiel 80 | 0,0 | I00 | 54,I | 95,4 |
| 3 | Beispiel 8I | 0,0 | I00 | 53,6 | 94,5 |
| 4 | Beispiel 82 | 0,0 | I00 | 52,8 | 93,I |
| 5 | Beispiel 83 | 0,0 | I00 | 53,0 | 93,5 |
| 6 | Beispiel 84 | 0,0 | I00 | 5I,7 | 9I,2 |
| 7 | Beispiel 85 | 0,0 | I00 | 52,5 | 92,6 |
| 8 | Beispiel 86 | 0,0 | I00 | 50,8 | 89,6 |
| 9 | Beispiel 87 | 0,0 | I00 | 54,4 | 95,9 |
| I0 | Beispiel 88 | 0,0 | I00 | 55,I | 97,2 |
| II | Beispiel 89 | 0,0 | I00 | 50,2 | 88,5 |

Beispiele 90 bis I02

Pflanzen der Hirse Sorte Mironovskoe 94 werden in der V. oder VI. Periode der Organogenese (nach Kupermann) mit einer I%igen wässrigen Emulsion von 3-(2'-Fluorphenylthio)-propandiol-I,2 (Beispiel 90); 3-(4'-Nitrophenoxy)-porpandiol-I,2 (Beispiel 9I); Äthanolaminsalz der 5-Bromsalizylsäure (Beispiel 92); 3-(4'-Chlorphenoxy )-propandiol-I,2 (Beispiel 93); 3-Chlor-I,2-epoxypropan (Beispiel 94); Etriol (Beispiel 95); Kaliumäthylxanthogenat (Beispiel 96); 4-Fluorphenoxyäthylalkohol (Beispiel 97); Diäthanolaminsalz der o-Fluorbenzoesäure (Beispiel 98); Monoäthanolaminsalz der Phthalsäure (Beispiel 99); Monoäthanolaminsalz der Ameisensäure (Beispiel I00); 3-(2'-Fluorphenoxy)-propandiol-I,2 (Beispiel I0I); Kaliumisoporpylxanthogenat (Beispiel I02) behandelt.

Die Emulsion enthält 0,I Masse% Kalziumalkylbenzolsulfonat mit I2 bis I4 Kohlenstoffatomen als Emulgiermittel und 0,0I Masse% Dimethylsulfoxid als Adjuvans.

Als Kontrolle dienen Pflanzen, behandelt mit einem Verdünner ohne Sterilisationsmittel.

Der Verbrauch an Sterilisationsmittel beträgt IO kg/ha.

Die Pfürergebnisse sind in der Tabelle I4 angegeben.

Beispiel IO3 bis IO7

Pflanzen der Hirse Sorte K-9693 Kormovoe I werden in der V. oder VI. Periode der Organogenese (nach Kupermann) mit einer I%igen wässrigen Emulsion von 4-Fluorphenoxyäthylalkohol (Beispiel IO3); 2-Chloräthanol (Beispiel IO4); 3-(4'-Fluorphenylthio)-propandiol-I,2 (Beispiel IO5); Kaliumbutylxanthogenat (Beispiel IO6); 3-(3-Chlorphenylthio)-propandiol-I,2 (Beispiel IO7) behandelt.

Die Emulsion enthält 0,I Masse% Kalziumalkylbenzolsulfonat mit I2 bis I4 Kohlenstoffatomen als Emulgiermittel und 0,0I Masse% Dodezylsulfat als Adjuvans.

Als Kontrolle dienen Pflanzen, behandelt mit einem Lösungsmittel ohne Sterilisationsmittel.

Der Verbrauch an Sterilisationsmittel beträgt IO kg/ha.

Die Prüfergebnisse sind in der Tabelle I5 angegeben.

Beispiele IO8 bis II2

Pflanzen der Sonnenblume Sorte Peredovik werden in der V. oder VI. Periode der Organogenese (nach Kupermann) mit einer 0,2%igen wässrigen Emulsion von 3-(4-Chlorphenoxy)-propandiol-I,2 (Beispiel IO8); 2-Chloräthanol (Beispiel IO9); 3-Chlor-I,2-epoxypropanol (Beispiel IIO); Kaliumisopropylzanthogenat (Beispiel III); Kaliumbutylxanthogenat (Beispiel II2) behandelt.

Die Emulsion enthält 0,I Masse% Kalziumalkylbenzolsulfonat mit I2 bis I4 Kohlenstoffatomen als Emulgiermittel und 0,0I Masse% Dodezylsulfat als Adjuvans. Als Kontrolle dienen Pflanzen, behandelt mit einem Lösungsmittel ohne Sterilisationsmittel.

Der Verbrauch an Sterilisationsmittel beträgt I,2 kg/ha.

Die Prüfergebnisse sind in der Tabelle I6 angegeben.

Beispiele II3 bis II7

Pflanzen der Sonnenblume Linien VK II9 werden mit einer 0,2%igen wässrigen Emulsion von 3-(4'-Chlorphenoxy)-propandiol-I,2 (Beispiel II3); 2-Chloräthanol (Bei-

spiel 114); 3-Chlor-1,2-epoxypropanol (Beispiel 115); Kaliumisopropylxanthogenat (Beispiel 116); Kalimbutylxanthogenat (Beispiel 117) behandelt.

Die Emulsion enthält 0,1 Masse% Kalziumalkulbenzolsulfonat mit 12 bis 14 Kohlenstoffatomen als Emulgiermittel und 0,01 Masse% Dimethylsulfoxid als Adjuvans. Als Kontrolle dienen Pflanzen, behandelt mit einem Lösungsmittel ohen Sterilisationsmittel.

Der Verbrauch an Sterilisationsmittel beträgt 1,2 kg/ha.

Die Prüfergebnisse sind in der Tabelle 17 angegeben.

Tabellen

| Lfd. Nr. | Beispiel Nr. | Anzahl von Körnern der Rispe im Isolator | Prozentsatz der Sterilität | Anzahl von Körnern der Rispe bei freier Bestäubung | Prozentsatz des Ansetzens bei freier Bestäubung |
|---|---|---|---|---|---|
| 1 | 2 | 3 | 4 | 5 | 6 |
| Tabelle 14 | | Hirse Sorte Mironovskoe 94 | | | |
| 1 | Kontrolle | 320,5 | 0,0 | 379,5 | 100 |
| 2 | Beispiel 90 | 0,0 | 100 | 300,5 | 79,2 |
| 3 | Beispiel 91 | 0,0 | 100 | 311,6 | 82,1 |
| 4 | Beispiel 92 | 0,0 | 100 | 320,7 | 84,5 |
| 5 | Beispiel 93 | 0,0 | 100 | 284,7 | 75,0 |
| 6 | Beispiel 94 | 0,0 | 100 | 312,3 | 82,2 |
| 7 | Beispiel 95 | 0,0 | 100 | 355,1 | 93,6 |
| 8 | Beispiel 96 | 0,0 | 100 | 330,2 | 87,0 |
| 9 | Beispiel 97 | 0,0 | 100 | 311,4 | 82,0 |
| 10 | Beispiel 98 | 0,0 | 100 | 348,6 | 91,2 |
| 11 | Beispiel 99 | 0,0 | 100 | 350,9 | 92,5 |
| 12 | Beispiel 100 | 0,0 | 100 | 352,2 | 92,8 |
| 13 | Beispiel 101 | 0,0 | 100 | 307,5 | 81,0 |
| 14 | Beispiel 102 | 0,0 | 100 | 288,6 | 76,0 |
| Tabelle 15 | | Hirse Sorte K-9693 Kormovoe 1 | | | |
| 1 | Kontrolle | 125,0 | 0,0 | 146,7 | 100,0 |
| 2 | Beispiel 103 | 0,0 | 100 | 128,7 | 87,7 |

Fortsetzung der Tabelle 15

| 1 | 2 | 3 | 4 | 5 | 6 |
|---|---|---|---|---|---|
| 3 | Beispiel 104 | 0,0 | 100 | 130,5 | 89,0 |
| 4 | Beispiel 105 | 0,0 | 100 | 128,7 | 87,7 |
| 5 | Beispiel 106 | 0,0 | 100 | 134,6 | 91,2 |
| 6 | Beispiel 107 | 0,0 | 100 | 100,8 | 68,7 |

Tabellen 16, 17

| Lfd. Nr. | Beispiel Nr. | Ansetzen von Achänen im Isolator bei der Bestäubung mit dem Pollengemisch in % | Ansetzen von Achänen bei freier Bestäubung in % | Masse von 1000 Achänen in g | Ölgehalt in % | Keimfähigkeit von Achänen in % | Pollensterilität in % |
|---|---|---|---|---|---|---|---|
| 1 | 2 | 3 | 4 | 5 | 6 | 7 | 8 |
| Tabelle 16 | | Sonnenblume Sorte Peredovik | | | | | |
| 1 | Kontrolle | 85,0 | 85,0 | 84 | 54,7 | 100 | 0,2 |
| 2 | Beispiel 108 | 0,0 | 81,7 | 81,6 | 53,6 | 100 | 100 |
| 3 | Beispiel 109 | 0,0 | 83,9 | 83,8 | 54,1 | 100 | 100 |
| 4 | Beispiel 110 | 0,0 | 82,3 | 82,9 | 54,8 | 100 | 100 |
| 5 | Beispiel 111 | 0,0 | 83,7 | 84,1 | 55,0 | 100 | 100 |
| 6 | Beispiel 112 | 0,0 | 85,3 | 84,0 | 55,1 | 100 | 100 |
| Tabelle 17 | | Sonnenblume Linie VK 119 | | | | | |
| 1 | Kontrolle | 72,6 | 85,0 | 60,0 | 51,0 | 100 | 2,0 |
| 2 | Beispiel 113 | 0,0 | 84,4 | 58,6 | 50,1 | 100 | 100 |
| 3 | Beispiel 114 | 0,0 | 83,5 | 59,2 | 50,8 | 100 | 100 |
| 4 | Beispiel 115 | 0,0 | 85,0 | 60,2 | 51,3 | 100 | 100 |
| 5 | Beispiel 116 | 0,0 | [illegible] | 62,8 | 52,2 | 100 | 100 |
| 6 | Beispiel 117 | 0,0 | [illegible] | 66,9 | 51,8 | 100 | 100 |

Industrielle Verwendbarkeit

Das erfindungsgmmäße Verfahren findet seine Anwendung in der Selektion und im Samenbau, bei der Herstellung von hochproduktiven Sorten und Hybriden der landwirkschaftlichen Kulturen.

# PATENTANSPRÜCHE:

1. Verfahren zur Sterilisation der Staubbeutel von Pflanzen durch ihre Behandlung mit einem Sterilisationsmittel in Verbindung mit einem Verdünner in der fünften und/oder sechsten Periode der Organogenese, dadurch g e k e n n z e i c h n e t , daß als Sterilisationsmittel Derivate von aliphatischen Alkoholen der allgemeinen Formel

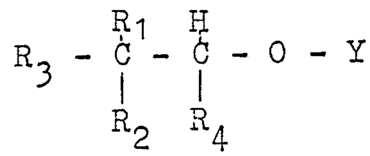

worin $R_1$ für H, Alkoxy, Alkylhalogenid, Methylbromid,
$R_2$ für H, Alkoxy, Hydroxyl,
$R_3$ für H, Cl, $ClCH_2$, $C_2H_5$, $NO_2$, $A^-N^+H_3$,

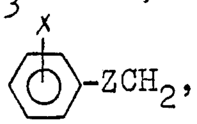

stehen, worin Z für O oder S steht,
$R_4$ H, $CH_3$,

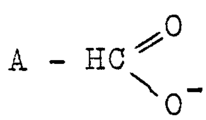 oder 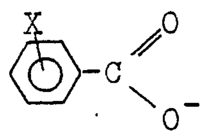

bedeutet, worin X H, F, Cl, OH, $NH_2$, $NO_2$ bezeichnet,
Y für H, 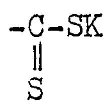; 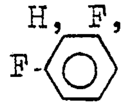, 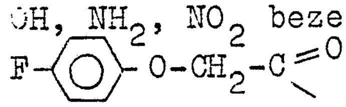,

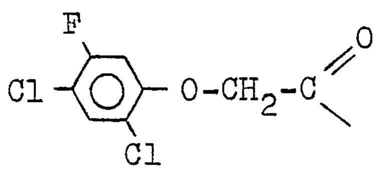, 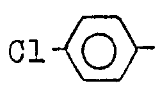, 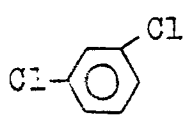,

steht oder $R_2$ - Y eine einfache Bindung darstellt, ihre Thioanaloga oder ihre Mischungen dienen.

2. Verfahren nach Anspruch 1, dadurch g e k e n n z e i c h n e t , daß die angegebenen Derivate von aliphatischen Alkoholen in Kombination mit Wasser als Verdünner in Form einer 0,1- bis 2%igen wäßrigen Emulsion zur Verwendung kommen.

3. Verfahren nach Anspruch 1, 2, dadurch g e - k e n n z e i c h n e t , daß als Pflanzen, die mit dem Sterilisationsmittel zu behandeln sind, Graspflanznn und Sonnenblume dienen.

4. Verfahren nach einem der Ansprüche 1 bis 3, dadurch g e k e n n z e i c h n e t , daß zwecks Erzielung eines hohen Sterilisationsgrades von Staubbeuteln unter ungünstigen klimatischen Bedingungen die wiederholte Behandlung von Pflanzen mit dem Sterilisationsmittel in der fünften und/oder sechsten Periode der Organogenese erfolgt.

# INTERNATIONAL SEARCH REPORT

International Application No PCT/SU 88/00052

**I. CLASSIFICATION OF SUBJECT MATTER** (if several classification symbols apply, indicate all) [8]

According to International Patent Classification (IPC) or to both National Classification and IPC

$IPC^4$ A01N 31/14

**II. FIELDS SEARCHED**

Minimum Documentation Searched [7]

| Classification System | Classification Symbols |
|---|---|
| $IPC^4$ | A01N 31/14, 37/02, 37/10, 37/36, 47/02;A01H 1/04 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | SU, A1, 641926 (Vsesojuzny ordena Lenina i ordena Druzhby narodov nauchno-issledovatelsky institut rastenievodstva im. N.N. Vavilova et al.) 18 January 1979 (18.01.79) | 1-3 |
| A | SU, A1, 740199 (Laboratoria geterozisa Vsesojuznogo ordena Lenina i ordena Druzhby narodov nauchno-issledovatelskogo instituta rastenievodstva im N.N. Vavilova et al.) 18 June 1980 (18.06.80) | 1-3 |
| A | PLANT BREEDING REVIEWS, edited by Jules Janick Purdue University, vol. 3, 1985 (AVI Publishing Company, Inc., Wesport, Connecticut, USA), D. Harold McRae "Advances in Chemical Hydridization" pages 169-186 | 1-3 |
| | ./. | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 10 October 1988 (10.1088) | 16 December 1988 (16.12.88) |
| **International Searching Authority** | **Signature of Authorized Officer** |
| ISA/SU | |

III. DOCUMENTS CONSIDERED TO BE RELEVANT (CONTINUED FROM THE SECOND SHEET)

| Category * | Citation of Document, with indication, where appropriate, of the relevant passages | Relevant to Claim No |
|---|---|---|
| A | SU, Al, 640711 (Laboratoria geterozisa Vsesojuznogo ordena Lenina i ordena Druzhby narodov nauchni-issledovatelskogo instituta rastenievodstva im N.N. Vavilova et al.) Vsesojuznoi ordena Lenina akademii selskokhozyaistvennykh nauk im V.I. Lenina et al.) 08 January 1979 (08.01.79) | 1-3 |
| A | G.S. Muromtsev et al. "Osnovy khirurgicheskoi regulyatsii rosta i produktivnosti rasteny", 1987, Agropromizdat (Moscow), page 323 | 1 |
| A | L.Dzh. Nikell "Regulyatory rosta rasteny. Primenenie v selskom khozyaistve" 1984, Kolos, (Moscow), pages 30-31 (cited in the description) | 1 |

-------------------